# EUROPEAN PATENT APPLICATION

(11) **EP 4 439 282 A1**
(43) Date of publication of application: **02.10.2024**
(21) Application number: 21969529.3
(22) Date of filing: 30.12.2021
(51) Int. Cl.: G06F 9/00

(54) **CROSS-DOMAIN COMMUNICATION METHOD AND CROSS-DOMAIN COMMUNICATION APPARATUS FOR COMPUTING APPARATUS**

(71) Applicant: Huawei Technologies Co., Ltd., Shenzhen, Guangdong 518129 (CN)
(72) Inventor: LI, Haoxiang, Shenzhen, Guangdong 518129 (CN); ZHAO, Junhua, Shenzhen, Guangdong 518129 (CN); ZHOU, Haifeng, Shenzhen, Guangdong 518129 (CN)
(74) Representative: Goddar, Heinz J.
(86) International application number: PCT/CN2021/142887
(87) International publication number: WO 2023/123163

(57) **Abstract**

This application discloses a cross-domain communication method in a computing apparatus and a cross-domain communication apparatus. The computing apparatus includes a plurality of domains, the plurality of domains include at least a first domain and a second domain, a first process runs in the first domain, a second process runs in the second domain, and the first process communicates with the second process through a shared storage unit. The method includes: The first process writes one or more first data packets into a first first-in first-out FIFO queue in the shared storage unit, and sends an inter-processor interrupt IPI signal to the second process; and the second process sequentially reads the one or more first data packets from the first FIFO queue in response to the IPI signal. This application is implemented, so that an IPI triggering frequency can be effectively reduced. This reduces a system load, a delay, and a packet loss rate. In addition, multi-domain multicast is supported, and communication functions are greatly expanded.

## Description

### TECHNICAL FIELD

This application relates to the field of communication technologies, and in particular, to a cross-domain communication method in a computing apparatus and a cross-domain communication apparatus.

### BACKGROUND

To meet increasing requirements of big data and computing power, a plurality of systems with different security levels are usually integrated into a system on chip. These systems with different security levels may be referred to as domains (domains). In addition, to ensure security of the system on chip, different domains are isolated from each other and run independently, and a necessary mutual communication mode is reserved.

An independent operating system runs in each domain, operating systems running in different domains may be the same or different, at least one process may run in each domain, and each process may run in a user mode or a kernel mode. For example, in the field of self-driving, an intelligent cockpit controller integrated into a system on chip may include a control domain, an entertainment domain, a driving information domain, and the like. The control domain may run a real-time operating system (real-time operating system, RTOS) on an R core (Cortex-R, focusing on a real-time system side Real-Time Profile), the entertainment domain may run the Android operating system on an A core (Cortex-A, focusing on an application function side Application Profile), and the driving information domain may run the QNX (Quick UNIX) operating system or the Linux operating system on the A core.

Currently, different domains mainly implement mutual communication requirements through memory sharing and inter-processor interrupt (inter-processor interrupt, IPI).

However, in a conventional cross-domain communication procedure, the IPI is frequently triggered, resulting in a heavy system load. In addition, only two cross-domain processes are supported to communicate with each other, resulting in limited functions and a high packet loss rate.

### SUMMARY

Embodiments of this application provide a cross-domain communication method in a computing apparatus and a cross-domain communication apparatus, to effectively reduce an IPI triggering frequency, thereby reducing a system load, a delay, and a packet loss rate. In addition, multi-domain multicast is supported, and communication functions are greatly expanded.

According to a first aspect, this application provides a cross-domain communication method in a computing apparatus. The computing apparatus includes a plurality of domains, the plurality of domains include at least a first domain and a second domain, a first process runs in the first domain, a second process runs in the second domain, and the first process communicates with the second process through a shared storage unit. The method includes: The first process writes one or more first data packets into a first first-in first-out FIFO queue in the shared storage unit, and sends an inter-processor interrupt IPI signal to the second process; and the second process sequentially reads the one or more first data packets from the first FIFO queue in response to the IPI signal.

When the first process and the second process start to communicate with each other, the first process establishes, in the shared storage unit, the first-in first-out FIFO queue for data transmission, the first process and the second process jointly maintain the queue, and after communication between the first process and the second process ends, the first process and the second process end maintenance on the queue.

In terms of technical effects, in this application, a circular first-in first-out (first input first output, FIFO) queue is used to organize a communication channel for communication between different domains. A plurality of data packets may be stored in the queue. Therefore, after a receiver process is woken up by the IPI signal, the receiver process may read, based on an organization sequence of storage units in the queue, a next data packet at a next location in the queue after receiving one data packet. In this way, the receiver process may sequentially receive all to-be-read data packets. In the conventional technology, because the shared storage unit is not organized, the receiver process can only receive a currently sent data packet after being woken up by the IPI signal, and cannot learn of a location for reading a next data packet from the shared storage unit. Compared with the conventional technology, this application can significantly implement interrupt convergence, effectively reduce a system load, shorten a communication delay, and greatly improve cross-domain communication performance.

In a feasible implementation, the sending an inter-processor interrupt IPI signal to the second process includes: When a first waiting identifier is stored in the shared storage unit, the first process sends the IPI signal to the second process, where the first waiting identifier indicates that the second process is in a sleep state of waiting to read a data packet.

In terms of technical effects, in a cross-domain communication manner of this application, a sender process triggers IPI once only when the receiver process is in the sleep state of waiting to receive data. Otherwise, the IPI signal is not sent. Therefore, in a manner in which a plurality of data packets are received through one IPI signal to implement interrupt convergence in the foregoing embodiment, interrupt convergence is further implemented, a system load is reduced, and a communication delay is shortened.

In a feasible implementation, that the second process sequentially reads the one or more first data packets from the first FIFO queue includes: The second process reads one first data packet from the first FIFO queue based on a first location identifier, and updates the first location identifier, where the first location identifier indicates a location at which the second process reads a data packet from the first FIFO queue; and the second process reads a next first data packet from the first FIFO queue based on an updated first location identifier.

In terms of technical effects, in this application, because a communication channel is organized and maintained based on a form of a queue, and a data packet in the queue follows a first-in first-out principle, a location identifier (that is, a packet reading location) may be set, to sequentially read all to-be-read data packets in the queue during one time of IPI. This reduces a quantity of times of sending the IPI signal in a cross-domain communication procedure of a computer system, effectively reduces a system load, and improves system communication performance.

In a feasible implementation, the method further includes: When a location indicated by the updated first location identifier is the same as a location indicated by a second location identifier, the second process enters the sleep state, where the second location identifier points to a queue tail of the first FIFO queue.

It should be understood that the location to which the second location identifier points is a next location at which a latest data packet enters the queue.

In terms of technical effects, the second location identifier is set to point to a location of the queue tail of the queue, so that the receiver process can enter the sleep state in time after reading all the to-be-read data packets. Processes in different domains need to be mutually exclusive when reading data packets. Therefore, according to this embodiment, when a process in another domain waits for a data packet in a receiving queue, the process may exit in time, thereby shortening a communication delay and improving communication performance.

In a feasible implementation, the first data packet includes data, and the method further includes: The second process performs calculation on the data in the first data packet; or the first data packet includes page table information, the page table information points to first physical address space in the shared storage unit, and the method further includes: The second process reads data from the first physical address space based on the page table information, and performs calculation on the read data.

In terms of technical effects, in this application, the page table information may be written into a queue of a communication channel instead of writing data directly used by the receiver process to perform calculation. This implements zero-copy of computing data, shortens a communication delay, and improves security of a communication procedure.

In a feasible implementation, the method further includes: The second process writes one or more second data packets into a second FIFO queue in the shared storage unit, and sends the IPI signal to the first process; and the first process sequentially reads the one or more second data packets from the second FIFO queue in response to the IPI signal.

In terms of technical effects, data transmission may be performed between the first process and the second process by using two queues. That is, for one process, one queue is used for data reading, and the other queue is used for data writing. Therefore, data reading and writing are implemented in parallel, and communication performance is improved.

In a feasible implementation, the first FIFO queue is located in a communication channel in the shared storage unit, the communication channel is connected to M processes, the M processes belong to N domains, and the M processes include the first process and the second process, where M and N are integers greater than 2; and a third data packet in the first FIFO queue includes a domain identifier, the domain identifier indicates a domain for sending the third data packet, and the third data packet is any data packet in the first FIFO queue.

In terms of technical effects, in this embodiment of this application, the communication channel is organized and maintained based on a form of a queue, and a corresponding domain identifier is added to each data packet. In this way, a procedure in which a plurality of processes in a plurality of domains perform communication at the same time can be implemented, and communication performance can be effectively expanded.

In a feasible implementation, the method further includes: When the domain indicated by the domain identifier in the third data packet is different from a domain to which an i^{th} process in the M processes belongs, the i^{th} process receives the third data packet, where i is equal to 1, 2, ..., or M.

In terms of technical effects, in this embodiment of this application, each time a data packet is read, whether a domain indicated by the domain identifier of the data packet is the same as a domain of the receiver process may be compared, to prevent a process from receiving a data packet sent in a local domain.

In a feasible implementation, the method further includes: after the i^{th} process receives the third data packet, updating a counting identifier of the third data packet in the communication channel, where the counting identifier of the third data packet indicates a quantity of processes that do not receive the third data packet; and when the counting identifier of the third data packet indicates that there is no process that does not receive the third data packet, deleting the third data packet in the first FIFO queue.

In terms of technical effects, in a multi-domain multicast scenario, a corresponding counting identifier is maintained for each data packet, to accurately indicate a read state of each data packet. In this way, after all corresponding processes that access the communication channel (referring to all processes that access the communication channel, except those that belong to a same domain as a process that sends the data packet) receive a data packet, the corresponding data packet in the queue is deleted in time, to ensure smooth implementation of the multi-domain multicast scenario.

In a feasible implementation, the method further includes: after a j^{th} process in the M processes is disconnected from the communication channel, updating a counting identifier of a fourth data packet, where the fourth data packet is a data packet that is not received by the j^{th} process in the first FIFO queue, the fourth data packet is written into the first FIFO queue after the j^{th} process accesses the communication channel, an updated counting identifier of the fourth data packet indicates a quantity of remaining processes that do not receive the fourth data packet, and j is a positive integer less than or equal to M; and when the counting identifier of the fourth data packet indicates that there is no process that does not receive the fourth data packet, deleting the fourth data packet in the first FIFO queue.

In terms of technical effects, in a multi-domain multicast scenario, when a process exits normally or abnormally (that is, the process is disconnected from the communication channel), a counting identifier of a data packet may also be correspondingly updated in this embodiment of this application, so that the counting identifier of the data packet accurately indicates a quantity of processes that do not read the data packet. Therefore, when there is no process that does not receive a data packet, a corresponding data packet in the queue is deleted in time, to ensure smooth implementation of the multi-domain multicast scenario.

According to a second aspect, an embodiment of this application provides a cross-domain communication apparatus. The cross-domain communication apparatus includes a first processing unit, a second processing unit, and a shared storage unit, the cross-domain communication apparatus includes a plurality of domains, the plurality of domains include at least a first domain and a second domain, a first process runs in the first domain, a second process runs in the second domain, and the first process communicates with the second process through the shared storage unit. The first processing unit is configured to: write, through the first process, one or more first data packets into a first first-in first-out FIFO queue in the shared storage unit, and send an inter-processor interrupt IPI signal to the second process. The second processing unit is configured to sequentially read, through the second process, the one or more first data packets from the first FIFO queue in response to the IPI signal.

In a feasible implementation, when sending the inter-processor interrupt IPI signal to the second process, the first processing unit is specifically configured to: when a first waiting identifier is stored in the shared storage unit, send the IPI signal to the second process through the first process, where the first waiting identifier indicates that the second process is in a sleep state of waiting to read a data packet.

In a feasible implementation, the second processing unit is specifically configured to: read, through the second process, one first data packet from the first FIFO queue based on a first location identifier, and update the first location identifier, where the first location identifier indicates a location at which the second process reads a data packet from the first FIFO queue; and read, through the second process, a next first data packet from the first FIFO queue based on an updated first location identifier.

In a feasible implementation, when a location indicated by the updated first location identifier is the same as a location indicated by a second location identifier, the second process enters the sleep state, where the second location identifier points to a queue tail of the first FIFO queue.

In a feasible implementation, the first data packet includes data, and the second processing unit is specifically configured to: perform, through the second process, calculation on the data in the first data packet; or the first data packet includes page table information, the page table information points to first physical address space in the shared storage unit, and the second processing unit is further configured to: read, through the second process, data from the first physical address space based on the page table information, and perform calculation on the read data.

In a feasible implementation, the second processing unit is further configured to: write one or more second data packets into the second FIFO queue through the second process in the shared storage unit, and send the IPI signal to the first process; and the first processing unit is further configured to sequentially read, through the first process, the one or more second data packets from the second FIFO queue in response to the IPI signal.

In a feasible implementation, the first FIFO queue is located in a communication channel in the shared storage unit, the communication channel is connected to M processes, each process of the M processes corresponds to a processing unit in the cross-domain communication apparatus, the M processes belong to N domains, and the M processes include the first process and the second process, where M and N are integers greater than 2; and a third data packet in the first FIFO queue includes a domain identifier, the domain identifier indicates a domain for sending the third data packet, and the third data packet is any data packet in the first FIFO queue.

In a feasible implementation, an i^{th} process in the M processes corresponds to an i^{th} processing unit; and the i^{th} processing unit is configured to: when the domain indicated by the domain identifier in the third data packet is different from a domain to which the i^{th} process belongs, receive the third data packet through the i^{th} process, where i is equal to 1, 2, ..., or M.

In a feasible implementation, the i^{th} processing unit is further configured to: after receiving the third data packet through the i^{th} process, update a counting identifier of the third data packet in the communication channel, where the counting identifier of the third data packet indicates a quantity of processes that do not receive the third data packet; and when the counting identifier of the third data packet indicates that there is no process that does not receive the first data packet, delete the third data packet in the first FIFO queue.

In a feasible implementation, a j^{th} process in the M processes corresponds to a j^{th} processing unit; and the j^{th} processing unit is configured to: after the j^{th} process is disconnected from the communication channel, update a counting identifier of a fourth data packet, where the fourth data packet is a data packet that is not received by the j^{th} process in the first FIFO queue, the fourth data packet is written into the first FIFO queue after the j^{th} process accesses the communication channel, an updated counting identifier of the fourth data packet indicates a quantity of remaining processes that do not receive the fourth data packet, and j is a positive integer less than or equal to M; and when the counting identifier of the fourth data packet indicates that there is no process that does not receive the fourth data packet, delete the fourth data packet in the first FIFO queue.

According to a third aspect, an embodiment of this application provides a chip system. The chip system includes the cross-domain communication apparatus provided in any one of the implementations of the second aspect, and is configured to implement a function in a procedure of the cross-domain communication method according to any one of the foregoing first aspect. In a possible design, the chip system further includes a memory, and the memory is configured to store program instructions and data that are necessary or related to the foregoing cross-domain communication method. The chip system may include a chip, or may include a chip and another discrete component.

According to a fourth aspect, an embodiment of this application provides a computer device. The computer device includes at least one processor and an interface circuit. The at least one processor is configured to invoke instructions stored in a memory, to perform the cross-domain communication method according to any one of the implementations of the first aspect.

According to a fifth aspect, an embodiment of this application provides a computer-readable storage medium. The computer-readable storage medium stores a computer program, and when the computer program is executed, the cross-domain communication method according to any one of the implementations of the first aspect can be implemented.

According to a sixth aspect, an embodiment of this application provides a computer program. The computer program includes instructions, and when the computer program is executed, the cross-domain communication method according to any one of the implementations of the first aspect is implemented.

### BRIEF DESCRIPTION OF DRAWINGS

The following describes accompanying drawings used in embodiments of this application.
FIG. 1 is a schematic diagram of a structure of a computing apparatus according to an embodiment of this application;
FIG. 2 is a schematic diagram of a structure of another computing apparatus according to an embodiment of this application;
FIG. 3 is a schematic flowchart of a cross-domain communication method in a computing apparatus according to an embodiment of this application;
FIG. 4 is a schematic diagram of a procedure of reading data from a queue according to an embodiment of this application;
FIG. 5 is a schematic diagram of an interaction procedure of cross-domain communication according to an embodiment of this application;
FIG. 6 is a flowchart of function invocation between a user mode and a kernel mode in a domain according to an embodiment of this application; and
FIG. 7 is a schematic diagram of a structure of a cross-domain communication apparatus according to an embodiment of this application.

### DESCRIPTION OF EMBODIMENTS

The following describes embodiments of this application with reference to the accompanying drawings in embodiments of this application. In descriptions of embodiments of this application, unless otherwise specified, "/" represents "or". For example, A/B may represent A or B. In this specification, "and/or" describes only an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

In the specification, claims, and accompanying drawings of this application, the terms "first", "second", "third", "fourth", and the like are intended to distinguish between different objects, but do not describe a specific order. In addition, the terms "include" and "have" and any other variations thereof are intended to cover a non-exclusive inclusion. For example, a procedure, a method, a system, a product, or a device that includes a series of steps or units is not limited to the listed steps or units, but optionally further includes an unlisted step or unit, or optionally further includes another inherent step or unit of the procedure, the method, the product, or the device. An "embodiment" mentioned in the specification indicates that a particular characteristic, structure, or feature described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

The following describes a system architecture and an application scenario of this application.

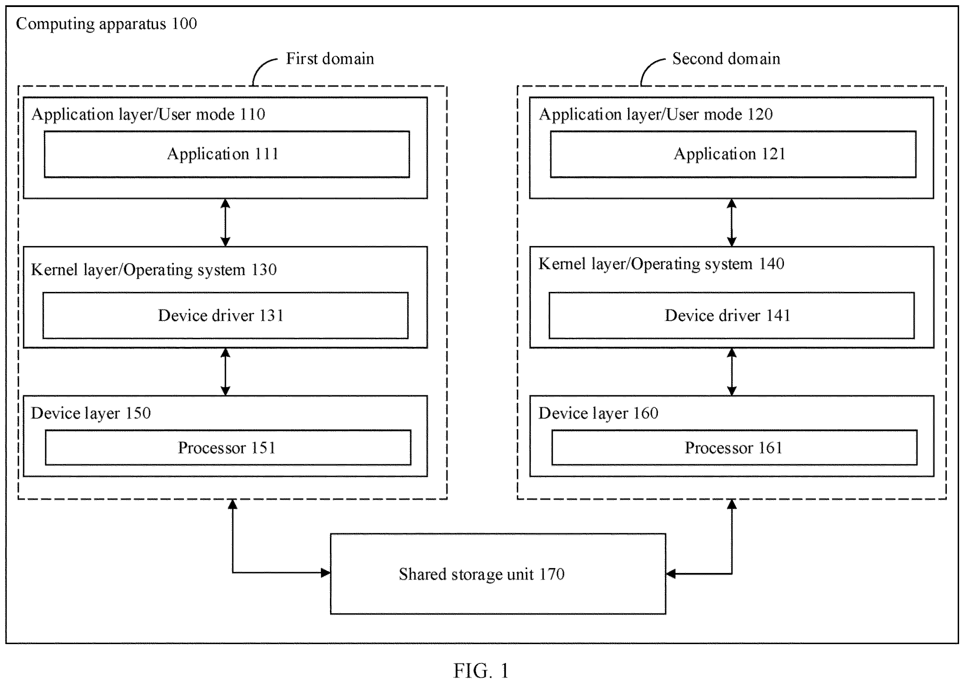

FIG. 1 is a schematic diagram of a structure of a computing apparatus according to an embodiment of this application, and may be used to describe a unicast communication scenario in the computing apparatus. The unicast communication scenario is a scenario in which a process in a domain communicates with a process in another domain.

As shown in FIG. 1, the computing apparatus 100 includes a first domain and a second domain, the first domain and the second domain may be two domains with a same security level or different security levels, and the first domain and the second domain are isolated from each other, to ensure system security. Independent operating systems run in the first domain and the second domain respectively, and an operating system running in the first domain and an operating system running in the second domain may be the same or different. One or more applications may run at an application layer in each of the first domain and the second domain, and each application corresponds to one process.

In a computer system shown in FIG. 1, a process running in the first domain may communicate with a process in the second domain through a shared storage unit 170 and IPI interrupt.

Optionally, a software architecture of the first domain and a software architecture of the second domain are shown in FIG. 1. The first domain includes an application layer/user mode 110, a kernel layer/operating system 130, and a device layer 150. The user layer 110 may include an application 111, the kernel layer 130 may include a device driver 131, and the device layer 150 includes a processor 151. The second domain includes an application layer/user mode 120, a kernel layer/operating system 140, and a device layer 160. The application layer/user mode 120 includes an application 121, the kernel layer/operating system 140 includes a device driver 141, and the device layer 160 includes a processor 161.

The application 111 and the application 121 may include applications such as an album, an audio and video application, and a Bluetooth. The device driver 131 and the device driver 141 may include hardware drivers such as a display driver, an audio driver, and a sensor driver. The processor 151 and the processor 161 may be central processing units (central processor unit, CPU) or other processing cores. The processor 151 may alternatively be a heterogeneous processor, namely, a processor of a different type. A specific implementation solution of the processor is not expanded or limited in this embodiment.

Optionally, the shared storage unit 170 may be a writable and readable storage unit, such as a register or a random access memory (random access memory, RAM), for example, a static random access memory (static random access memory, SRAM), a dynamic random access memory (dynamic random access memory, DRAM) or a synchronous dynamic random access memory (synchronous DRAM, SDRAM), or a double data rate SDRAM (dual data rate SDRAM, DDR SDRAM).

It should be noted that the first domain and the second domain may be two domains deployed on one system on chip (system on chip, SoC), or domains respectively deployed on two different SoCs.

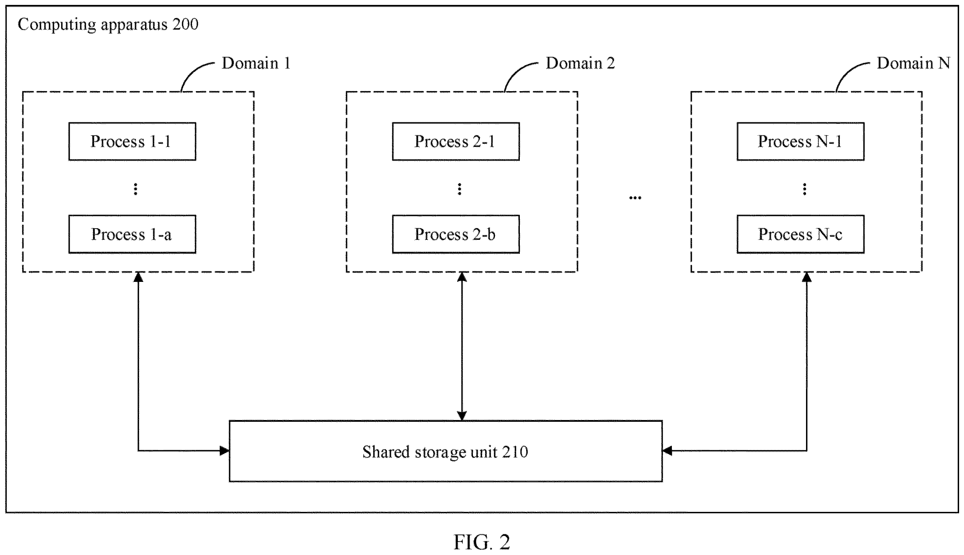

FIG. 2 is a schematic diagram of a structure of another computing apparatus according to an embodiment of this application, and may be used to describe a multi-domain multicast communication scenario in the computing apparatus. Multi-domain multicast is a scenario in which a process in one domain sends data, and the sent data may be received by a plurality of processes in one or more other domains. In this case, each of the one or more other domains may include one or more processes for receiving the data.

As shown in FIG. 2, the computing apparatus 200 includes N domains with different security levels (a domain 1, a domain 2, ..., and a domain N). It should be noted that each "domain" in this embodiment of this application may be software or a whole of software and hardware. When a domain is software, the domain may include an operating system and an application running on the operating system. When a domain is a whole of software and hardware, the domain includes hardware (including a processor and a memory (such as a register)) and software (including an operating system and an application running on the operating system) running on the hardware.

Any two domains in the N domains are isolated from each other, to ensure system security, and N is a positive integer greater than or equal to 2. An independent operating system runs in each of the N domains, and operating systems running in any two domains may be the same or different. One or more applications may run in each domain, and each application corresponds to a process.

That any two domains are isolated from each other specifically means that any two domains are isolated at a software layer and are partially isolated at a hardware layer. Isolation at the software layer means that software in one domain cannot directly exchange data with software in another domain. Partial isolation at the hardware layer means that some hardware may be shared by two domains, while some hardware is independently used by each domain. For example, hardware that may be jointly used by two domains may include a register or the like, and hardware that is independently used by each domain may include a processor or the like. Hardware that is jointly used by a plurality of domains and hardware that is independently used by each domain are not enumerated in this application, and the foregoing examples do not constitute a limitation.

A process (process) corresponding to each application is a running activity of the application related to a data set. The process may apply for and own system resources. Generally, one process may include several threads (threads), and the threads may use resources owned by the process. In an operating system that introduces threads, a process is usually used as a basic unit for allocating resources, and a thread is used as a basic unit for independent running and scheduling.

In the computing apparatus shown in FIG. 2, one process running in one domain may communicate with a plurality of processes in another domain or a plurality of processes in a plurality of other domains through the shared storage unit 210 and IPI interrupt.

A software architecture of each of the N domains may be the same as a software architecture of the first domain or the second domain in FIG. 1. Details are not described herein again.

At least one process may run in each of the N domains. As shown in FIG. 2, a process 1-1, ..., and a process 1-a may run in a domain 1; a process 2-1, ..., and a process 2-b may run in a domain 2; ...; and a process N-1, ..., and a process N-c may run in a domain N. a, b, and c are positive integers.

The shared storage unit 210 and the shared storage unit 170 in FIG. 1 may be storage units of a same type.

It should be noted that the foregoing N domains with different security levels may be deployed on one system on chip (system on chip, SoC), or deployed on a plurality of SoCs. This is not limited in this application.

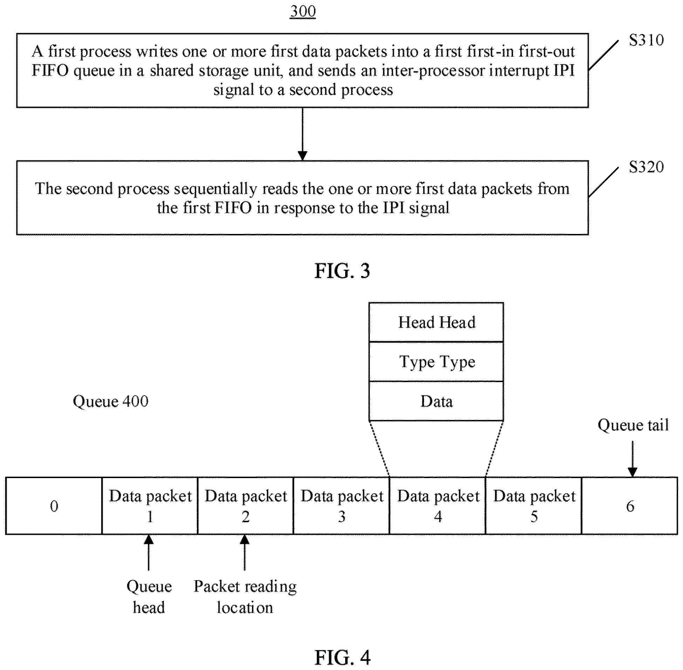

FIG. 3 is a schematic flowchart of a cross-domain communication method in a computing apparatus according to an embodiment of this application. As shown in FIG. 3, the method 300 includes a step S310 and a step S320. The computing apparatus to which the method 300 is applied may include a plurality of domains, the plurality of domains include at least a first domain and a second domain, a first process runs in the first domain, a second process runs in the second domain, and the first process communicates with the second process through a shared storage unit.

S310: The first process writes one or more first data packets into a first first-in first-out FIFO queue in the shared storage unit, and sends an inter-processor interrupt IPI signal to the second process.

Specifically, before the first process communicates with the second process, the first process and the second process establish a corresponding communication channel in the shared storage unit or open a same communication channel in the shared storage unit. A data sender, namely, the first process, organizes data storage space in the communication channel in a form of a first-in first-out FIFO queue, that is, establishes the first FIFO queue for data transmission between the first process and the second process. The established first FIFO queue is jointly maintained by the first process and the second process in a subsequent data transmission procedure.

The queue may be a cyclic queue. Data in the queue complies with a first-in first-out principle. That is, a data packet that is first written to the queue is read first. A plurality of data packets may be stored in each queue. A specific structure of the FIFO queue is described in detail in the embodiment shown in FIG. 4 below. Specifically, the first process may write the one or more first data packets into the first FIFO queue each time, and each first data packet is stored in a storage unit in the first FIFO queue.

In a feasible implementation, sending the inter-processor interrupt IPI signal to the second process includes: When a first waiting identifier is stored in the shared storage unit, the first process sends the IPI signal to the second process, where the first waiting identifier indicates that the second process is in a sleep state of waiting to read a data packet.

Optionally, when the second process is connected to the communication channel, the second process checks whether a to-be-read data packet exists in the communication channel. If to-be-read data packets exist in the first communication channel, the second process sequentially reads the to-be-read data packets in the first FIFO queue. If no to-be-read data packet exists in the communication channel, the second process enters the sleep state, and writes the first waiting identifier into the communication channel, to wait to be synchronously woken up when a process in another domain writes data into the communication channel.

Specific procedures in which the second process determines whether the to-be-read data packet exists in the communication channel, and reads the data packet are described in detail in a subsequent embodiment.

Specifically, in a procedure in which the first process communicates with the second process, when the first process writes the one or more first data packets into the communication channel, the first process simultaneously checks whether the first waiting identifier corresponding to the second process exists in the communication channel. When the first waiting identifier is stored in the communication channel, the first process sends the IPI signal to a processor that runs the second process, to wake up the second process that is in the sleep state. When the first waiting identifier corresponding to the second process is not stored in the communication channel, the first process does not send the IPI signal to the processor that runs the second process. Therefore, compared with a cross-domain communication manner in which an IPI signal is sent once when one data packet is sent in the conventional technology, this application can effectively implement interrupt convergence, thereby reducing a system load, shortening a communication delay, and effectively improving system communication performance.

The first waiting identifier indicates that the second process has been connected to the foregoing communication channel and is in the sleep state of waiting to read a data packet.

Optionally, the first waiting identifier may be a number, a character, a character string, or any other symbol. This is not limited in this application.

S320: The second process sequentially reads the one or more first data packets from the first FIFO queue in response to the IPI signal.

Specifically, after the second process is woken up from the sleep state by the IPI signal sent by the first process, the second process may sequentially read all to-be-received data packets from the first FIFO queue, to perform a corresponding data processing task in the second process, where the to-be-received data packets include the one or more first data packets sent by the first process.

In a feasible implementation, that the second process sequentially reads the one or more first data packets from the first FIFO queue includes: The second process reads one first data packet from the first FIFO queue based on a first location identifier, and updates the first location identifier, where the first location identifier indicates a location at which the second process reads a data packet from the first FIFO queue; and the second process reads a next first data packet from the first FIFO queue based on an updated first location identifier.

In a feasible implementation, the method further includes: When a location indicated by the updated first location identifier is the same as a location indicated by a second location identifier, the second process enters the sleep state, where the second location identifier points to a queue tail of the first FIFO queue.

Optionally, the second process may determine, based on the first location identifier and the second location identifier, whether the communication channel includes a to-be-read data packet and a quantity of to-be-read data packets. The first location identifier indicates a location (namely, a packet reading location) at which the second process reads a data packet from the first FIFO queue each time, and the second location identifier indicates a location of the queue tail of the first FIFO queue.

Specifically, the second process reads one data packet each time, and in each reading procedure, the second process first compares whether the location indicated by the first location identifier is the same as the location indicated by the second location identifier. When the location indicated by the first location identifier is different from the location indicated by the second location identifier, the second process reads one data packet from the first FIFO queue based on the location indicated by the first location identifier, and simultaneously updates the first location identifier, where an updated first location identifier indicates a location at which the second process reads a data packet from the first FIFO queue next time. When the location indicated by the first location identifier is the same as the location indicated by the second location identifier, it indicates that the second process has read all to-be-read data packets in the first FIFO queue. In this case, the second process enters the sleep state.

Optionally, the first location identifier and the second location identifier may be numbers, characters, character strings, or any other symbols. This is not limited in this application.

The first location identifier and the second location identifier may be stored in a storage area outside the queue in the communication channel.

FIG. 4 is a schematic diagram of a procedure of reading data from a queue according to an embodiment of this application. As shown in FIG. 4, a cyclic queue 400 (corresponding to the first FIFO queue in the foregoing embodiment) includes seven storage units (a storage unit 0 to a storage unit 6), and each storage unit may store one data packet. In the example shown in FIG. 4, one data packet (a data packet 1 to a data packet 5 respectively) is separately stored in a storage unit 1 to a storage unit 5 in the queue, that is, a total of five data packets are stored in the queue. In this case, a queue head of the queue is a location of the data packet 1, and a queue tail of the queue is a location of a storage unit 6 (namely, a location indicated by the second location identifier in the foregoing embodiment). A packet reading position (namely, a location indicated by the first location identifier in the foregoing embodiment) indicates a location at which a process reads data packets from the queue each time.

In a procedure of reading data packets from the queue 400, it is first determined that the packet reading location is a location of a storage unit 2 and is not the queue tail of the queue. In this case, a data packet 2 is directly read from a storage unit 2. Then, the packet reading location is updated. For example, the packet reading location is increased by 1, and an updated packet reading location points to a location of a storage unit 3. Subsequently, a data packet 3, a data packet 4, and the data packet 5 are sequentially read with reference to a reading procedure of the data packet 2, and the packet reading location of the process is correspondingly updated after one data packet is read each time. After the data packet 5 is read, an updated packet reading location is the location of the storage unit 6, and the location of the storage unit 6 is the queue tail of the queue. In this case, the process has read all to-be-read data packets from the queue, and the process enters a sleep state.

Optionally, FIG. 4 further provides a feasible structure of a data packet, and a specific structure of the data packet 4 is shown in FIG. 4. A data packet in each storage unit in the queue may specifically include a head (head), a type (type), and data. Information in the head may indicate a specific length (length) of the data in the data packet. The type (type) indicates whether the data in the data packet is data that can be directly used for calculation or page table information (Detailed descriptions are provided in the following embodiment, and the page table information indicates a segment of physical address space in a shared memory). The data is specific data included in the data packet, and is data directly used by a process for calculation or page table information.

It should be understood that the specific structure of the data packet in FIG. 4 is merely a specific example provided in this application. This is not limited in this application. Similarly, the queue 400 in FIG. 4 is merely a specific example of a structure of a queue provided in this application. A quantity of storage units and a data structure in a queue are not specifically limited in this application.

It should be noted that any embodiment described above may be applied to the unicast communication scenario shown in FIG. 1, and may also be applied to the multi-domain multicast communication scenario shown in FIG. 2. When any embodiment is applied to the multi-domain multicast scenario shown in FIG. 2, the first domain and the second domain in the foregoing embodiment may be any two of the N domains shown in FIG. 2.

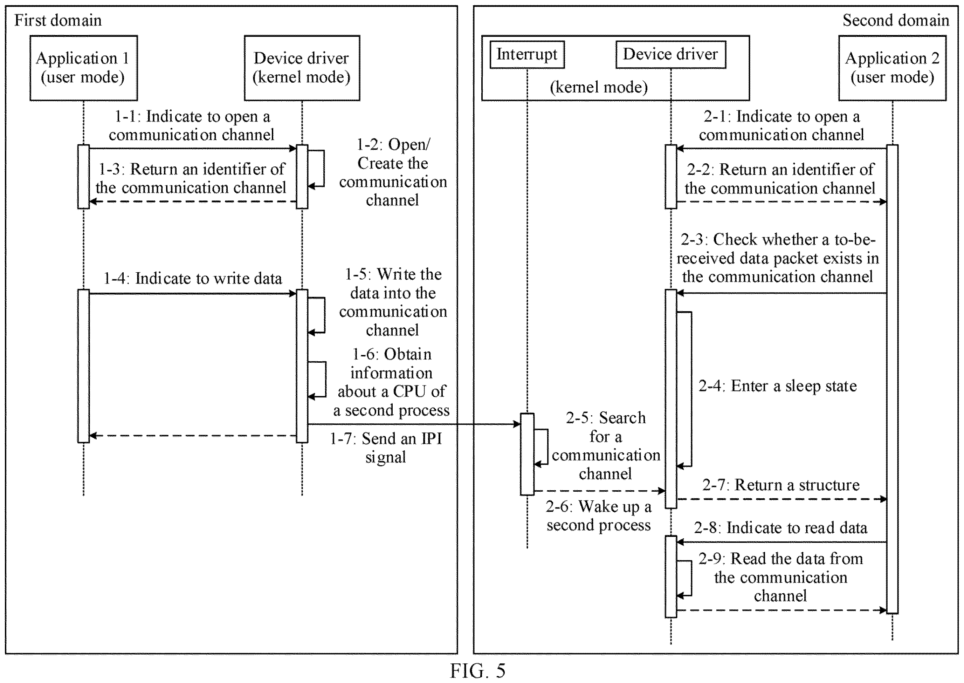

FIG. 5 is a schematic diagram of an interaction procedure of cross-domain communication according to an embodiment of this application, and is used to describe a communication procedure between processes in any two domains from a software perspective. A first domain and a second domain in FIG. 5 may be respectively the first domain and the second domain in FIG. 1, or any two of the N domains in FIG. 2.

As shown in FIG. 5, an application 1 runs in the first domain, and corresponds to a first process; and an application 2 runs in the second domain, and corresponds to a second process. A cross-domain communication procedure between the first process and the second process is shown in the following.

The first process corresponding to the application 1 performs a step 1-1: indicating to open a communication channel. Specifically, the first process indicates a device driver in a kernel mode to open the communication channel for communicating with the second process in the second domain. Then, the device driver performs a step 1-2: opening or creating the communication channel. Specifically, the device driver opens or creates one communication channel from a shared storage unit, and establishes a first FIFO queue in the communication channel, that is, maintains the communication channel in a form of a queue. The device driver performs a step 1-3: returning an identifier of the communication channel. Specifically, the device driver may return a number (for example, a channel ID) of the opened or created communication channel to the application 1 in a user mode. The first process performs a step 1-4: indicating to write data. Specifically, the first process indicates the device driver to write, into the communication channel, data sent to the second process. After receiving the indication, the device driver performs a step 1-5: writing the data into the communication channel. Specifically, the device driver copies corresponding data (namely, one or more first data packets in the foregoing embodiment) from the shared storage unit and writes the data into the first FIFO queue in the communication channel. After writing the data, the device driver performs a step 1-6: obtaining information about a CPU that runs the second process. Specifically, after detecting that a first waiting identifier of the second process corresponding to the application 2 is stored in the shared storage unit, the device driver obtains a number of the CPU that runs the second process, and performs a step 1-7: sending an IPI signal. Specifically, the IPI signal is sent to a CPU that runs the second domain.

The second process corresponding to the application 2 performs a step 2-1: indicating to open a communication channel; and a step 2-2 is performed: returning an identifier of the communication channel, to open the communication channel created or accessed by the application 1. Herein, refer to corresponding procedures in the step 1-1 and the step 1-2. Details are not described again. Then, a step 2-3 is performed: checking whether a to-be-received data packet exists in the communication channel, and if the to-be-received data packet exists in the communication channel, reading a corresponding data packet from the first FIFO queue in the communication channel. Otherwise, if there is no to-be-received data packet, a step 2-4 is performed: entering a sleep state, that is, the second process corresponding to the application 2 enters the sleep state. After receiving the IPI signal, the CPU in the second domain triggers an interrupt task: performing a step 2-5, that is, searching for a communication channel. Specifically, the communication channel is re-accessed based on the identifier that is of the communication channel (for example, information such as a number of the communication channel) and that is previously returned in the step 2-2; and a step 2-6 is performed: waking up the second process. After the second process is woken up, the second process traverses communication channels in the shared storage unit, searches for a corresponding communication channel based on the number (namely, the channel ID) that is of the accessed communication channel and that is stored before the second process enters the sleep state, and performs a step 2-7 by using a device driver in a kernel mode: returning a structure, where the structure indicates which communication channel in the shared storage unit includes a data packet. The second process performs a step 2-8: indicating to read data. Specifically, the second process indicates the device driver to read a data packet from the first FIFO queue. After receiving the indication, the device driver performs a step 2-9: reading the data from the communication channel, that is, when the IPI signal is received once, sequentially reading one or more data packets from the first FIFO queue.

It should be noted that for a specific procedure corresponding to each step in the embodiment in FIG. 5, refer to corresponding descriptions in the foregoing embodiment. Details are not described herein again.

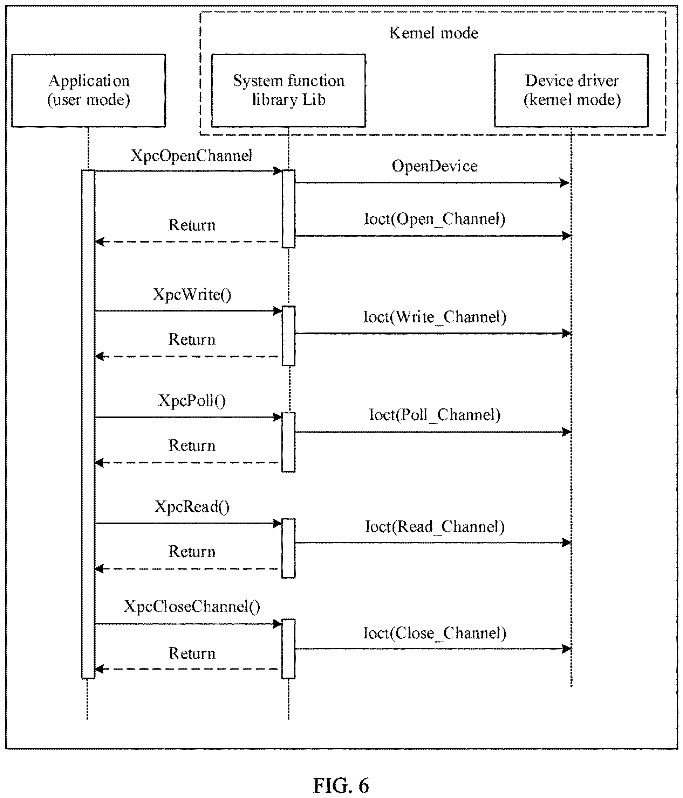

FIG. 6 is a flowchart of function invocation between a user mode and a kernel mode in a domain according to an embodiment of this application, and is used as a supplement to a communication procedure between a user mode and a kernel mode in a first domain and a second domain in FIG. 5.

As shown in FIG. 6, a process corresponding to an application first executes an XpcOpenChannel function, and the function is used to open/establish a communication channel in a shared storage unit. Specifically, in an execution procedure of the XpcOpenChannel function, an OpenDevice function and an Ioct(Open_Channel) function in a system function library Lib are sequentially invoked, to indicate a device driver to open/establish the communication channel in the shared storage unit, and to organize and maintain the communication channel in a form of a queue; and then, an identifier of the communication channel is returned to a process in a user mode by using a Return function.

The process executes an XpcWrite() function to write data to a queue in the communication channel. Specifically, in an execution procedure of the XpcWrite() function, an Ioct(Write_Channel) function in the system function library is invoked, to indicate the device driver to write the data into the queue in the communication channel, and return a corresponding return value the process in the user mode by using the Return function after the data is written.

The process executes an XpcPoll() function to check whether to-be-read data is included in the communication channel. Specifically, in an execution procedure of the XpcPoll() function, an Ioct(Poll_Channel) function in the system function library is invoked, to indicate the device driver to detect whether the to-be-read data packet exists in the communication channel, and return a corresponding parameter to the process in the user mode by using the Return function.

When the return value indicates that the to-be-read data packet exists in the communication channel, the process executes an XpcRead() function to read the data packet in the communication channel. Specifically, during an execution procedure of the XpcRead() function, an Ioct(Read_Channel) function in the system function library is invoked, to read the data packet from the queue in the communication channel based on a corresponding packet reading location (which corresponds to a location indicated by the first location identifier in the foregoing embodiment), and a corresponding value is returned by using the Return function, to indicate whether to continue to read a next data packet.

After the process has finished reading all to-be-read data packets in the communication channel, the process executes an XpcCloseChannel() function, to disconnect from the communication channel. Specifically, the XpcCloseChannel() function invokes an Ioct(Close_Channel) function in the system function library, to exit the communication channel, and a corresponding parameter is returned by using the Return function, to indicate that exit is completed.

It should be noted that for a specific execution procedure of each function in the embodiment in FIG. 6, reference may be made to a description of a corresponding procedure in the foregoing embodiment. Details are not described herein again. In addition, functions in the embodiment in FIG. 6 are merely examples provided in this application. A person skilled in the art may alternatively use another function to perform an operation the same as the function in FIG. 6. This is not limited in this application.

The following describes specific communication modes in a unicast scenario and a multi-domain multicast scenario.

### (1) Unicast scenario

In a unicast scenario, the cross-domain communication method in embodiments of this application may be further used to implement zero-copy of data, to improve security of a cross-domain communication procedure. Specific implementation is shown in the following.

In a feasible implementation, the first data packet includes data, and the method further includes: The second process performs calculation on the data in the first data packet; or the first data packet includes page table information, the page table information points to first physical address space in the shared storage unit, and the method further includes: The second process reads data from the first physical address space based on the page table information, and performs calculation on the read data.

Each first data packet may include data directly used by the second process for calculation, or include the page table information pointing to the first physical address space.

The first physical address space stores data that the first process needs to send to the second process, and the second process needs to perform corresponding calculation by using the data in an execution procedure.

Optionally, the first physical address space may be a segment of continuous storage space or discontinuous storage space in the shared storage unit, and the first physical address space is located in a non-communication channel area in the shared storage unit.

Specifically, the first process first converts the first physical address space into corresponding virtual address space. Further, optionally, the first process writes a number of a virtual memory page corresponding to the virtual address space into the first FIFO queue. Then, the second process reads the number of the corresponding virtual memory page from the first FIFO queue, and converts the virtual address space represented by the number of the virtual memory page into physical address space in the shared storage unit. Finally, the second process directly reads data from the obtained physical address space to perform a corresponding computing task. This simplifies a copying procedure of computing data, improves security of a communication procedure, and shortens a communication delay.

Further, specific procedures of reading and writing the page table information in the first domain and the second domain may be as follows: The first process invokes a corresponding interface in a function library Lib, to allocate the first physical address space from the shared storage unit, and writes corresponding computing data; the first process indicates a device driver in the first domain to establish a page table mapping, that is, the first process indicates the device driver to convert the first physical address space into the virtual address space and send the virtual address space to the first process; and the first process writes, by using the device driver, the number (namely, page table information) of the virtual memory page corresponding to the virtual address space into the first FIFO queue. A device driver in the second domain reads the number of the virtual memory page from the first FIFO queue, and establishes a page table mapping, that is, the device driver converts a virtual address represented by the virtual memory page into a segment of corresponding physical address; and the second process directly reads data from a corresponding location in the shared storage unit based on the obtained segment of physical address, to perform corresponding calculation.

Optionally, each time the second process reads one first data packet, the second process synchronously receives a data type identifier corresponding to the first data packet. The data type identifier indicates whether data in the first data packet is data that can be directly used by the second process to perform a computing task or the foregoing page table information.

Optionally, in the unicast scenario, the first process and the second process may communicate with each other through only one queue (namely, the foregoing first FIFO queue). In this case, for the first process or the second process, a procedure of sending data and a procedure of reading data by the first process or the second process can only be mutually exclusive.

In a feasible implementation, the method further includes: The second process writes one or more second data packets into a second FIFO queue in the shared storage unit, and sends the IPI signal to the first process; and the first process sequentially reads the one or more second data packets from the second FIFO queue in response to the IPI signal.

Specifically, in the unicast scenario, two processes (namely, the first process and the second process) in different domains may further maintain two queues in a communication channel, and respectively perform data reading and writing operations by using the two queues. The first process writes, by using the first FIFO queue, data that needs to be sent to the second process, and reads, by using the second FIFO queue, data sent by the second process. That is, the first process and the second process may read and write data in parallel, thereby effectively improving communication performance.

The first FIFO queue and the second FIFO queue are located on a same communication channel.

It should be understood that a procedure in which the second process writes the one or more second data packets into the second FIFO queue and a procedure in which the first process sequentially reads the one or more second data packets from the second FIFO queue are correspondingly the same as a procedure in which the first process writes the one or more first data packets and a procedure in which the second process reads the one or more first data packets in the foregoing embodiment. Details are not described herein again.

### (2) Multi-domain multicast scenario

In a multi-domain multicast scenario, a communication channel for communication between a plurality of processes in different domains includes one queue, that is, the first FIFO queue in the foregoing embodiment. In addition, a communication scenario identifier is stored in the communication channel, and indicates that the channel is used for the multi-domain multicast scenario. When a new process is connected to the communication channel in a subsequent communication procedure, the newly connected process performs communication according to a rule in the multi-domain multicast scenario in response to the communication scenario identifier stored in the channel. For a specific rule, refer to specific descriptions in the following embodiment.

In a feasible implementation, the method further includes: The first FIFO queue is located in the communication channel in the shared storage unit, the communication channel is connected to M processes, the M processes belong to N domains, and the M processes include the first process and the second process, where M and N are integers greater than 2; and a third data packet in the first FIFO queue includes a domain identifier, the domain identifier indicates a domain for sending the third data packet, and the third data packet is any data packet in the first FIFO queue.

Specifically, in the multi-domain multicast scenario, one communication channel may be connected to the M processes, and the M processes perform communication by using the first FIFO queue in the communication channel. The M processes may belong to the N different domains, and M and N are integers greater than or equal to 2. The third data packet is any data packet in the first FIFO queue, and each data packet in the first FIFO queue includes a domain identifier that indicates a domain that is in the M domains and from which the data packet is sent, so that a receiver process can subsequently skip a data packet sent from a local domain when receiving data packets.

At a moment, a data packet stored in the first FIFO queue may be written by a process in one domain, or may be written by processes in different domains.

It should be noted that, in the multi-domain multicast scenario, a plurality of processes in different domains perform communication by using one queue in the communication channel, that is, for any process in the foregoing M processes, only data reading or data writing can be performed at a moment, and a data reading operation and a data writing operation cannot be performed in parallel. In addition, a communication procedure between any two processes that belong to different domains and that are in the M processes may be the same as a communication manner between the first process and the second process in the foregoing embodiment.

In a feasible implementation, when the domain indicated by the domain identifier in the third data packet is different from a domain to which an i^{th} process in the M processes belongs, the i^{th} process receives the third data packet, where i is equal to 1, 2, ..., or M.

Specifically, when the i^{th} process in the M processes reads the third data packet from the first FIFO queue, the i^{th} process first determines whether the domain indicated by the domain identifier in the third data packet is the same as the domain to which the i^{th} process belongs. If the domain indicated by the domain identifier in the third data packet is different from the domain to which the i^{th} process belongs, the i^{th} process reads the third data packet. If the domain indicated by the domain identifier in the third data packet is the same as the domain to which the i^{th} process belongs, the i^{th} process ignores the data packet, that is, does not read the third data packet, where i is equal to 1, 2, ..., or M.

In conclusion, in the multi-domain multicast scenario, for the M domains that perform communication by using the first FIFO queue in the communication channel, any one of the M domains does not read a data packet that is written into the first FIFO queue by a process in the any one domain.

It should be noted that procedures of reading a data packet from the first FIFO queue by any two processes that respectively belong to different domains need to be mutually exclusive. That is, at a moment, a process in only one domain can read a data packet from the first FIFO queue.

Optionally, when packet reading locations corresponding to a plurality of processes included in the second domain are the same, after the device driver in the second domain receives an indication of a process, the device driver in the second domain may read one data packet from the first FIFO queue based on the packet reading location. Then, the plurality of processes in the second domain may separately obtain the data packet from the device driver, that is, a procedure in which a process in one domain simultaneously communicates with a plurality of processes in another domain may be implemented.

In a feasible implementation, the method further includes: after the i^{th} process receives the third data packet, updating a counting identifier of the third data packet in the communication channel, where the counting identifier of the third data packet indicates a quantity of processes that do not receive the third data packet; and when the counting identifier of the third data packet indicates that there is no process that does not receive the first data packet, deleting the third data packet in the first FIFO queue.

Each data packet in the first FIFO queue corresponds to one counting identifier, and the counting identifier is maintained by a device driver in a domain to which a process sending the data packet belongs. The counting identifier indicates a quantity of remaining processes that do not receive a data packet corresponding to the counting identifier.

Optionally, a counting identifier corresponding to a data packet may be a number, a character, or another feasible form. This is not limited in this application.

Optionally, a counting identifier of each data packet in the first FIFO queue may be stored in the communication channel in the shared storage unit.

Optionally, when a data packet is written into the first FIFO queue in the communication channel, a counting identifier corresponding to the data packet is initialized. A quantity indicated by the initialized counting identifier is equal to a quantity of processes connected to the communication channel before the data packet is written, and the processes connected to the communication channel include a process in a sleep state waiting to receive a data packet.

Optionally, that the i^{th} process updates the counting identifier of the third data packet in the communication channel after receiving the third data packet is specifically: each time a process receives the third data packet, subtracting 1 from a quantity indicated by the counting identifier of the third data packet.

Optionally, when the counting identifier of the third data packet indicates that there is no process that does not receive the first data packet, the deleting the third data packet in the first FIFO queue may be specifically: when a quantity indicated by the counting identifier of the third data packet is less than or equal to 0, deleting the third data packet in the first FIFO queue.

For example, after the first process writes the third data packet into the first FIFO queue, and if a quantity of processes (which do not include a process belonging to a same domain as the first process) connected to the communication channel is 5, the counting identifier of the third data packet is initialized to 5. Then, each time a process receives the third data packet from the first FIFO queue, 1 is subtracted from the counting identifier of the third data packet until the counting identifier is equal to 0, and 0 indicates that all the foregoing five processes receive the third data packet. In this case, the third data packet is deleted from the first FIFO queue.

It should be understood that the counting identifier of the third data packet may alternatively be updated in an ascending order or in another manner. This is not limited in this application.

In a feasible implementation, the method further includes: after a j^{th} process in the M processes is disconnected from the communication channel, updating a counting identifier of a fourth data packet, where the fourth data packet is a data packet that is not received by the j^{th} process in the first FIFO queue, the fourth data packet is written into the first FIFO queue after the j^{th} process accesses the communication channel, an updated counting identifier of the fourth data packet indicates a quantity of remaining processes that do not receive the fourth data packet, and j is a positive integer less than or equal to M; and when the counting identifier of the fourth data packet indicates that there is no process that does not receive the fourth data packet, deleting the fourth data packet in the first FIFO queue.

Specifically, after the j^{th} process in the M processes is disconnected from the communication channel, all K data packets that are not received by the j^{th} process and that are in the first FIFO queue are updated. The K data packets are all data packets that are written into the first FIFO queue after the j^{th} process accesses the communication channel. It is easily understood that the fourth data packet is any one of the K data packets.

Optionally, the updating the counting identifier of the fourth data packet after the j^{th} process in the M processes is disconnected from the communication channel may be specifically: subtracting 1 from a quantity indicated by the counting identifier of the fourth data packet.

Optionally, when the counting identifier of the fourth data packet indicates that there is no process that does not receive the fourth data packet, the deleting the fourth data packet in the first FIFO queue may be specifically: when a quantity indicated by the counting identifier of the fourth data packet is less than or equal to 0, deleting the fourth data packet in the first FIFO queue.

It should be understood that the counting identifier of the fourth data packet may alternatively be updated in an ascending order or in another manner. This is not limited in this application.

In conclusion, when a process is abnormal or exits normally (that is, the process is disconnected from the communication channel), the counting identifier of the fourth data packet is updated. In this way, the counting identifier of the fourth data packet can accurately indicate a quantity of remaining processes that do not read the fourth data packet. This facilitates subsequently deleting the fourth data packet in the first FIFO queue in time, and improves a data transmission capability of the communication channel.

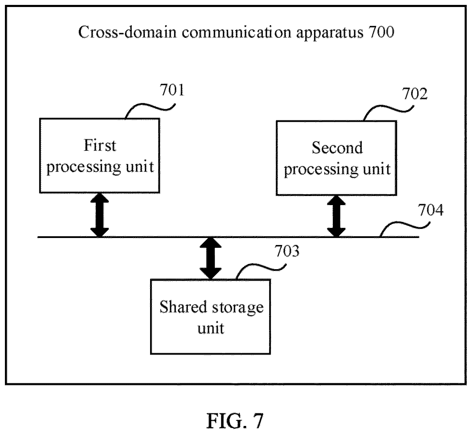

FIG. 7 is a schematic diagram of a structure of a cross-domain communication apparatus according to an embodiment of this application. As shown in FIG. 7, a cross-domain communication apparatus 700 includes a first processing unit 701, a second processing unit 702, a shared storage unit 703, and a bus 704. The cross-domain communication apparatus 700 includes a plurality of domains, the plurality of domains include at least a first domain and a second domain, a first process runs in the first domain, a second process runs in the second domain, and the first process communicates with the second process through the shared storage unit 703.

The first processing unit 701 is configured to: write, through the first process, one or more first data packets into a first first-in first-out FIFO queue in the shared storage unit, and send an inter-processor interrupt IPI signal to the second process. The second processing unit 702 is configured to sequentially read, through the second process, the one or more first data packets from the first FIFO queue in response to the IPI signal.

In a feasible implementation, when sending the inter-processor interrupt IPI signal to the second process, the first processing unit 701 is specifically configured to: when a first waiting identifier is stored in the shared storage unit, send the IPI signal to the second process through the first process, where the first waiting identifier indicates that the second process is in a sleep state of waiting to read a data packet.

In a feasible implementation, the second processing unit 702 is specifically configured to: read, through the second process, one first data packet from the first FIFO queue based on a first location identifier, and update the first location identifier, where the first location identifier indicates a location at which the second process reads a data packet from the first FIFO queue; and read, through the second process, a next first data packet from the first FIFO queue based on an updated first location identifier.

In a feasible implementation, when a location indicated by the updated first location identifier is the same as a location indicated by a second location identifier, the second process enters the sleep state, where the second location identifier points to a queue tail of the first FIFO queue.

In a feasible implementation, the first data packet includes data, and the second processing unit 702 is specifically configured to: perform, through the second process, calculation on the data in the first data packet; or the first data packet includes page table information, the page table information points to first physical address space in the shared storage unit, and the second processing unit is further configured to: read, through the second process, data from the first physical address space based on the page table information, and perform calculation on the read data.

In a feasible implementation, the second processing unit 702 is further configured to: establish a second FIFO queue in the shared storage unit through the second process; and write, through the second process, one or more second data packets into the second FIFO queue in the shared storage unit, and send the IPI signal to the first process. The first processing unit is further configured to sequentially read, through the first process, the one or more second data packets from the second FIFO queue in response to the IPI signal.

In a feasible implementation, the first FIFO queue is located in a communication channel in the shared storage unit 703, the communication channel is connected to M processes, each process of the M processes corresponds to a processing unit in the cross-domain communication apparatus, the M processes belong to N domains, and the M processes include the first process and the second process, where M and N are integers greater than 2; and a third data packet in the first FIFO queue includes a domain identifier, the domain identifier indicates a domain for sending the third data packet, and the third data packet is any data packet in the first FIFO queue.

A processing unit corresponding to each of the M processes is a processing unit that runs the process. It should be noted that processing units corresponding to different processes may be the same or different, that is, different processes may be run by a same processing unit or run by different processing units. This is not limited in this application.

In a feasible implementation, an i^{th} process in the M processes corresponds to an i^{th} processing unit; and the i^{th} processing unit is configured to: when the domain indicated by the domain identifier in the third data packet is different from a domain to which the i^{th} process belongs, receive the third data packet through the i^{th} process, where i is equal to 1, 2, ..., or M.

In a feasible implementation, the i^{th} processing unit is further configured to: after receiving the third data packet through the i^{th} process, update a counting identifier of the third data packet in the communication channel, where the counting identifier of the third data packet indicates a quantity of processes that do not receive the third data packet; and when the counting identifier of the third data packet indicates that there is no process that does not receive the third data packet, delete the third data packet in the first FIFO queue.

In a feasible implementation, a j^{th} process in the M processes corresponds to a j^{th} processing unit; and the j^{th} processing unit is configured to: after the j^{th} process is disconnected from the communication channel, update a counting identifier of a fourth data packet, where the fourth data packet is a data packet that is not received by the j^{th} process in the first FIFO queue, the fourth data packet is written into the first FIFO queue after the j^{th} process accesses the communication channel, an updated counting identifier of the fourth data packet indicates a quantity of remaining processes that do not receive the fourth data packet, and j is a positive integer less than or equal to M; and when the counting identifier of the fourth data packet indicates that there is no process that does not receive the fourth data packet, delete the fourth data packet in the first FIFO queue.

The shared storage unit 703 may be a writable and readable storage unit, such as, a register or a random access memory (random access memory, RAM), for example, a static random access memory (static random access memory, SRAM), a dynamic random access memory (dynamic random access memory, DRAM) or a synchronous dynamic random access memory (synchronous DRAM, SDRAM), or a double rate SDRAM (dual data rate SDRAM, DDR SDRAM). This is not limited in this application.

The first processing unit 701 and the second processing unit 702 may use a general-purpose central processing unit (central processing unit, CPU), a microprocessor, an application-specific integrated circuit (application specific integrated circuit, ASIC), a graphics processing unit (graphics processing unit, GPU), a field programmable gate array (field programmable gate array, FPGA) or another programmable logic device, a discrete gate or a transistor logic device, or a discrete hardware component. This is not limited in this application.

The bus 704 may include a path for information transmission between components (for example, the first processing unit 701, the second processing unit 702, and the shared storage unit 703) of the cross-domain communication apparatus 700.

It should be understood that, for a specific procedure in which the components in the foregoing cross-domain communication apparatus 700 perform cross-domain communication, refer to a corresponding procedure in the foregoing method embodiments. Details are not described herein again.

An embodiment of this application provides a chip system. The chip system may include the cross-domain communication apparatus provided in any one of the implementations, and is configured to implement a function in a procedure of the cross-domain communication method according to any one of the foregoing first aspect. In a possible design, the chip system further includes a memory, and the memory is configured to store program instructions and data that are necessary or related to the foregoing cross-domain communication method. The chip system may include a chip, or may include a chip and another discrete component.

An embodiment of this application provides a computer device. The computer device includes at least one processor and an interface circuit. The at least one processor is configured to invoke instructions stored in a memory to perform any cross-domain communication method in the foregoing embodiments.

An embodiment of this application provides a computer-readable storage medium. The computer-readable storage medium stores a computer program, and when the computer program is executed, the cross-domain communication method in any one of the foregoing embodiments is implemented.

An embodiment of this application provides a computer program. The computer program includes instructions, and when the computer program is executed, the cross-domain communication method in any one of the foregoing embodiments is implemented.

In the foregoing embodiments, descriptions of each embodiment have different emphasis. For a part that is not described in detail in an embodiment, refer to related descriptions in other embodiments. It should be noted that, for brief description, the foregoing method embodiments are represented as a series of action combinations. However, a person skilled in the art should appreciate that this application is not limited to the described order of the actions, because according to this application, some steps may be performed in other orders or simultaneously. In addition, a person skilled in the art should also appreciate that all the embodiments described in this specification are all preferred embodiments, and the related actions and modules are not necessarily mandatory to this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A cross-domain communication method in a computing apparatus, wherein the computing apparatus comprises a plurality of domains, the plurality of domains comprise at least a first domain and a second domain, a first process runs in the first domain, a second process runs in the second domain, the first process communicates with the second process through a shared storage unit, and the method comprises:
writing, by the first process, one or more first data packets into a first first-in first-out FIFO queue in the shared storage unit, and sending an inter-processor interrupt IPI signal to the second process; and
sequentially reading, by the second process, the one or more first data packets from the first FIFO queue in response to the IPI signal.

2. The method according to claim 1, wherein the sending an inter-processor interrupt IPI signal to the second process comprises:
when a first waiting identifier is stored in the shared storage unit, sending, by the first process, the IPI signal to the second process, wherein the first waiting identifier indicates that the second process is in a sleep state of waiting to read a data packet.

3. The method according to claim 1 or 2, wherein the sequentially reading, by the second process, the one or more first data packets from the first FIFO queue comprises:
reading, by the second process, one first data packet from the first FIFO queue based on a first location identifier, and updating the first location identifier, wherein the first location identifier indicates a location at which the second process reads a data packet from the first FIFO queue; and
reading, by the second process, a next first data packet from the first FIFO queue based on an updated first location identifier.

4. The method according to claim 3, wherein the method further comprises:
when a location indicated by the updated first location identifier is the same as a location indicated by a second location identifier, entering, by the second process, the sleep state, wherein the second location identifier points to a queue tail of the first FIFO queue.

5. The method according to any one of claims 1 to 4, wherein the first data packet comprises data, and the method further comprises:
performing, by the second process, calculation on the data in the first data packet; or
the first data packet comprises page table information, and the page table information points to first physical address space in the shared storage unit, and the method further comprises:
reading, by the second process, data from the first physical address space based on the page table information, and performing calculation on the read data.

6. The method according to claims 1 to 4, wherein the method further comprises:
writing, by the second process, one or more second data packets into a second FIFO queue in the shared storage unit, and sending the IPI signal to the first process; and
sequentially reading, by the first process, the one or more second data packets from the second FIFO queue in response to the IPI signal.

7. The method according to any one of claims 1 to 4, wherein
the first FIFO queue is located in a communication channel in the shared storage unit, the communication channel is connected to M processes, the M processes belong to N domains, and the M processes comprise the first process and the second process, wherein M and N are integers greater than 2; and
a third data packet in the first FIFO queue comprises a domain identifier, wherein the domain identifier indicates a domain for sending the third data packet, and the third data packet is any data packet in the first FIFO queue.

8. The method according to claim 7, wherein the method further comprises:
when the domain indicated by the domain identifier in the third data packet is different from a domain to which an i^{th} process in the M processes belongs, receiving, by the i^{th} process, the third data packet, wherein i is equal to 1, 2, ..., or M.

9. The method according to claim 7 or 8, wherein the method further comprises:
after the i^{th} process receives the third data packet, updating a counting identifier of the third data packet in the communication channel, wherein the counting identifier of the third data packet indicates a quantity of processes that do not receive the third data packet; and
when the counting identifier of the third data packet indicates that there is no process that does not receive the third data packet, deleting the third data packet in the first FIFO queue.

10. The method according to any one of claims 7 to 9, wherein the method further comprises:
after a j^{th} process in the M processes is disconnected from the communication channel, updating a counting identifier of a fourth data packet, wherein the fourth data packet is a data packet that is not received by the j^{th} process in the first FIFO queue, the fourth data packet is written into the first FIFO queue after the j^{th} process accesses the communication channel, an updated counting identifier of the fourth data packet indicates a quantity of remaining processes that do not receive the fourth data packet, and j is a positive integer less than or equal to M; and
when the counting identifier of the fourth data packet indicates that there is no process that does not receive the fourth data packet, deleting the fourth data packet in the first FIFO queue.

11. A cross-domain communication apparatus, wherein the cross-domain communication apparatus comprises a first processing unit, a second processing unit, and a shared storage unit, the cross-domain communication apparatus comprises a plurality of domains, the plurality of domains comprise at least a first domain and a second domain, a first process runs in the first domain, a second process runs in the second domain, and the first process communicates with the second process through the shared storage unit;
the first processing unit is configured to:
write, through the first process, one or more first data packets into a first first-in first-out FIFO queue in the shared storage unit, and send an inter-processor interrupt IPI signal to the second process; and
the second processing unit is configured to:
sequentially read, through the second process, the one or more first data packets from the first FIFO queue in response to the IPI signal.

12. The apparatus according to claim 11, wherein when sending the inter-processor interrupt IPI signal to the second process, the first processing unit is specifically configured to:
when a first waiting identifier is stored in the shared storage unit, send the IPI signal to the second process through the first process, wherein the first waiting identifier indicates that the second process is in a sleep state of waiting to read a data packet.

13. The apparatus according to claim 11 or 12, wherein the second processing unit is specifically configured to:
read, through the second process, one first data packet from the first FIFO queue based on a first location identifier, and update the first location identifier, wherein the first location identifier indicates a location at which the second process reads a data packet from the first FIFO queue; and
read, through the second process, a next first data packet from the first FIFO queue based on an updated first location identifier.

14. The apparatus according to claim 13, wherein
when a location indicated by the updated first location identifier is the same as a location indicated by a second location identifier, the second process enters the sleep state, wherein the second location identifier points to a queue tail of the first FIFO queue.

15. The apparatus according to any one of claims 11 to 14, wherein the first data packet comprises data, and the second processing unit is further configured to:
perform, through the second process, calculation on the data in the first data packet; or
the first data packet comprises page table information, and the page table information points to first physical address space in the shared storage unit, and the second processing unit is further configured to:
read, through the second process, data from the first physical address space based on the page table information, and perform calculation on the read data.

16. The apparatus according to any one of claims 11 to 14, wherein
the second processing unit is further configured to:
write, through the second process, one or more second data packets into a second FIFO queue in the shared storage unit, and send the IPI signal to the first process; and
the first processing unit is further configured to:
sequentially read, through the first process, the one or more second data packets from the second FIFO queue in response to the IPI signal.

17. The apparatus according to any one of claims 11 to 14, wherein
the first FIFO queue is located in a communication channel in the shared storage unit, the communication channel is connected to M processes, each of the M processes corresponds to one processing unit in the cross-domain communication apparatus, the M processes belong to N domains, and the M processes comprise the first process and the second process, wherein M and N are integers greater than 2; and
a third data packet in the first FIFO queue comprises a domain identifier, wherein the domain identifier indicates a domain for sending the third data packet, and the third data packet is any data packet in the first FIFO queue.

18. The apparatus according to claim 17, wherein an i^{th} process in the M processes corresponds to an i^{th} processing unit, and the i^{th} processing unit is configured to:
when the domain indicated by the domain identifier in the third data packet is different from a domain to which the i^{th} process belongs, receive, through the i^{th} process, the third data packet, wherein i is equal to 1, 2, ..., or M.

19. The apparatus according to claim 17 or 18, wherein the i^{th} processing unit is further configured to:
after receiving the third data packet through the i^{th} process, update a counting identifier of the third data packet in the communication channel, wherein the counting identifier of the third data packet indicates a quantity of processes that do not receive the third data packet; and
when the counting identifier of the third data packet indicates that there is no process that does not receive the third data packet, delete the third data packet in the first FIFO queue.

20. The apparatus according to any one of claims 17 to 19, wherein a j^{th} process in the M processes corresponds to a j^{th} processing unit, and the j^{th} processing unit is configured to:
after the j^{th} process is disconnected from the communication channel, update a counting identifier of a fourth data packet, wherein the fourth data packet is a data packet that is not received by the j^{th} process in the first FIFO queue, the fourth data packet is written into the first FIFO queue after the j^{th} process accesses the communication channel, an updated counting identifier of the fourth data packet indicates a quantity of remaining processes that do not receive the fourth data packet, and j is a positive integer less than or equal to M; and
when the counting identifier of the fourth data packet indicates that there is no process that does not receive the fourth data packet, delete the fourth data packet in the first FIFO queue.

21. A computer device, wherein the computer device comprises at least one processor and an interface circuit; and
the at least one processor is configured to invoke instructions stored in a memory, to perform the method according to any one of claims 1 to 10.

22. A computer-readable storage medium, wherein the computer-readable storage medium stores a computer program, and when the computer program is executed, the method according to any one of claims 1 to 10 is implemented.

23. A computer program, wherein the computer program comprises instructions, and when the computer program is executed, the method according to any one of claims 1 to 10 is implemented.
